# EUROPÄISCHE PATENTANMELDUNG

(11) **EP 3 061 514 A1**
(43) Veröffentlichungstag der Anmeldung: **31.08.2016**
(21) Anmeldenummer: 15000897.7
(22) Anmeldetag: 26.03.2015
(51) Int. Cl.: B01D 53/04, B01J 8/00, B01J 8/02, B01J 8/04

(54) **VERFAHREN ZUM HERSTELLEN EINES HORIZONTAL DURCHSTRÖMTEN ADSORBERS UND TRENNWANDMODUL ZUR VERWENDUNG IN DIESEM VERFAHREN**

(30) Priorität: 25.02.2015 DE 102015002260
(71) Anmelder: Linde Aktiengesellschaft, 80331 München (DE)
(72) Erfinder: Ferstl, Johann, 80995 München (DE); Grahl, Matthias, 80639 München (DE); Bader, Wolfgang, 82067 Ebenhausen (DE); Schneider, Helko, 82515 Wolfratshausen (DE); Firlbeck, Michael, 83308 Trostberg (DE); Hentschel, Harald, 93326 Abensberg (DE); Keil, Philipp, 93051 Regensburg (DE)
(74) Vertreter: Imhof, Dietmar

(57) **Zusammenfassung**

Das Verfahren dient zum Herstellen eines horizontal durchströmten Adsorbers mit zwei Adsorbentien, der zwei unmittelbar benachbarte Schüttungen in einem liegenden oder stehenden Behälter enthält. Zwischen den beiden Schüttungen besteht eine vertikale Grenzfläche. In einem Schritt wird (a) eine vertikale Trennwand auf den Boden des Adsorptionsbetts gestellt wird und anschließend auf jeder Seite der Trennwand je eines der beiden Adsorbentien bis zu einer ersten Höhe eingefüllt wird, die den oberen Rand des Trennrings nicht überschreitet. In dem folgenden Schritt (b) wird die vertikale Trennwand so weit nach oben verschoben, dass ihr unterer Rand noch in der vorhandenen Schüttung steckt. Dann wird auf jeder Seite der Trennwand je eines der beiden Adsorbentien bis zu einer zweiten Höhe eingefüllt, die den oberen Rand der verschobenen Trennwand nicht überschreitet. Schließlich wird der Schritt (b) so oft wiederholt, bis eine vorbestimmte Füllhöhe erreicht ist. Gemäß der Erfindung ist die vertikale Trennwand aus mindestens drei Trennwandmodulen (6.01) aufgebaut, die sich nur über einen Teil der Länge oder des Umfangs der vertikalen Trennwand erstrecken und unabhängig voneinander in vertikaler Richtung bewegbar sind.

## Beschreibung

Die Erfindung betrifft ein Verfahren gemäß dem Oberbegriff des Patentanspruchs 1.

Ein horizontal durchströmter Adsorber enthält ein Adsorptionsbett und kann als liegender oder stehender Behälter konstruiert sein; das heißt er ist entweder länger als hoch oder höher als breit. Er ist so ausgebildet, dass das Adsorptionsbett im Betrieb horizontal durchströmt wird. Ein spezieller Typ eines stehenden Adsorbers wird durch einen Radialadsorber gebildet. Es ist schon länger bekannt, Radialadsorber für adsorptive Trenn- und Reinigungsverfahren einzusetzen, etwa zur Reinigung von Einsatzluft für eine Tieftemperatur-Luftzerlegungsanlage. Ein derartiger Radialadsorber, wie er von der Behälter- und Korbstruktur auch bei der Erfindung verwendet wird, ist aus EP 402783 A2 (= US 5827485) bekannt. Er weist im Wesentlichen Zylindersymmetrie auf und enthält mindestens zwei zylinderförmige Körbe in einem Behälter, die ein ringförmiges Adsorptionsbett begrenzen. Der kreisförmige innere Raum innerhalb des innersten Korbes und der ringförmige Außenraum zwischen äußerstem Korb und Behälterwand dienen dem Zu- und Abströmen eines Fluids, das gereinigt oder getrennt werden soll.

Die Behälterhöhe eines Radialadsorbers ist deutlich größer als sein Durchmesser. Typische Werte sind 3 bis 25 m für die Höhe und 2 bis 8 m für den Durchmesser.

Aus US 5837021 ist es bekannt, zwei unmittelbar benachbarte Schüttungen zu verwenden. Mit "unmittelbar benachbart" ist hier gemeint, dass sich kein Zwischenkorb und keine sonstige Trennvorrichtung zwischen den beiden Schüttungen befinden. Es wird auch ein Verfahren zum Befüllen eines solchen Radialadsorbers vorgeschlagen, das mit einer als Trennring ausgebildeten Trennwand arbeitet. Allerdings wurde dieses Verfahren wohl nie angewendet, weil es sehr aufwändig und mit vielen Nachteilen verbunden ist.

Der Erfindung liegt die Aufgabe zugrunde, ein Herstellungsverfahren der eingangs genannten Art und dafür geeignete Hilfsmittel zu finden, die eine Befüllung eines horizontal durchströmten Adsorbers mit zwei oder mehr unmittelbar aneinander grenzenden Schüttungen mit vergleichsweise geringem Aufwand ermöglichen.

Diese Aufgabe wird einerseits durch das Herstellverfahren nach Patentanspruch 1 gelöst. Demnach wird im Unterschied zum Stand der Technik kein einteiliger Ring als Trennring oder - bei ebener Grenzschicht - keine einteilige Wand als ebene Trennwand verwendet, sondern der Trennring/die ebene Trennwand besteht aus einer Mehrzahl von Trennwandmodulen, die horizontal aneinander gereiht den Trennring/die ebene Trennwand bilden. Die Anzahl von Trennwandmodulen für einen Trennring/eine ebene Trennwand beträgt zum Beispiel 3 bis 25, vorzugsweise 6 bis 18. Sie sind zum Beispiel alle gleich aufgebaut und bestehen im Falle eines Trennrings hauptsächlich aus einem kreisbogenförmig gebogenen Blech. Ihre Höhe liegt beispielsweise zwischen 0,3 m und 1 m, vorzugsweise zwischen 0,4 m und 0,6 m.

Während ein massiver Trennring oder eine massive ebene Trennwand eine Hebevorrichtung benötigen, um nach oben verschoben zu werden, sind die einzelnen Trennwandmodule wesentlich leichter handhabbar. Sie können von Hand nach oben verschoben werden. Bei dem erfindungsgemäßen Verfahren sind außerdem keine speziellen Befüllvorrichtungen oder sonstigen Hilfseinrichtungen notwendig, die in den Behälter eingebracht werden müssten. Das erfindungsgemäße Herstellverfahren ist besonders variabel; zum Beispiel können die Trennwandmodule nach dem Befüllen sogar aus dem Behälter entfernt werden. Dabei ist zu berücksichtigen, dass die Befüllung in dem bereits fertiggestellten Behälter stattfinden muss, der in der Regel nur noch durch ein Mannloch zugänglich ist.

Es ergibt sich im Rahmen der Erfindung ein besonders einfaches Verfahren zur Herstellung eines horizontal durchströmten Adsorbers, das nur vergleichsweise geringen Aufwand erfordert.

Das erfindungsgemäße Prinzip einer segmentierten Trennwand kann grundsätzlich auch auf anderen technischen Gebieten angewendet werden, insbesondere bei jedem Behälter mit mindestens einer vertikalen Grenzfläche zwischen zwei Schichten aus granularem Material, beispielsweise bei Adsorbern anderer Bauweise und bei Behältern mit Katalysatorbetten.

Besonders vorteilhaft ist die Anwendung des erfindungsmäßen Verfahrens bei einem Radialadsorber, wenn also der horizontal durchströmte Adsorber durch einen Radialadsorber und die Trennwand durch einen kreisförmigen Trennring gebildet werden, wobei der Behälter des Radialadsorbers eine zylinderförmige Außenwand und zwei zylinderförmige Körbe aufweist, die das Adsorptionsbett begrenzen.

Es ist günstig, wenn nach dem Verschieben des Trennrings am oberen Rand mindestens eines Trennwandmoduls mindestens ein, insbesondere zwei Abstandshalter angeordnet werden, welche das Trennwandmodul temporär mit dem äußeren Korb verbinden, und diese Abstandshalter bei Beginn des nächsten Schritts (b) abgenommen und nach dem Verschieben des Trennwandmoduls wieder angebracht werden. Vorzugsweise werden für jedes Trennwandmodul mindestens zwei Abstandshalter eingesetzt.

Die Abstandshalter ermöglichen eine präzise Justierung der Trennwandmodule und damit des gesamten Trennrings. Damit kann die Schichtdicke der Schüttungen sehr genau konstant gehalten werden. Die Abstandshalter ermöglichen die Einhaltung der Schichtdicke auch dann, wenn an der Innenseite des Außenkorbs in bestimmten vertikalen Abständen Verstärkungsringe oder ähnliche Einbauten vorhanden sind. Die Fixierung der Abstandshalter erfolgt dann einfach oberhalb dieser Verstärkungsringe.

Die Abstandshalter werden vorzugsweise durch Einhaken am äußeren Korb mit dem äußeren Korb verbunden. Der Korb weist, wie aus EP 402783 A2 (= US 5827485) bekannt, horizontale Langlöcher auf. Das äußere Ende der Abstandshalter ist so ausgebildet, dass es in eines dieser Langlöcher eingreifen kann. Damit können die Abstandshalter mit je einem Handgriff in den Korb eingerastet und wieder von ihm gelöst werden und es entsteht trotzdem eine stabile Verbindung.

Außerdem ist es günstig, wenn jedes Trennwandmodul ein Mittel zum dichten Verbinden mit dem benachbarten Trennwandmodul aufweist; dieses Mittel kann insbesondere durch eine Winkelleiste entlang einer der beiden vertikalen Kanten des Trennwandmoduls gebildet werden. Der Öffnungswinkel der Winkelleiste beträgt zwischen 30 und 120°. Hierdurch lässt sich eine wirksame Abdichtung erreichen, die das unerwünschte Vermischen beider Adsorbentien verhindert. Damit kann eine klare und saubere Grenzfläche zwischen den beiden Schüttungen erzeugt werden. Die Winkelleiste kann durch ein Winkelblech gebildet werden.

Die Winkelleiste ist so angeordnet, dass die vertikale Kante des benachbarten Trennwandmoduls in dem Winkel geführt wird. Damit behindert dieses Abdichtungsmittel nicht die vertikale Beweglichkeit der Trennwandmodule gegeneinander, sondern stellt im Gegenteil eine zusätzliche Führungshilfe beim Verschieben (Hochziehen) der Trennwandmodule dar.

Die oben genannte Aufgabe wird außerdem durch ein Trennwandmodul gemäß den Patentansprüchen 6 bis 8 gelöst.

Die Erfindung sowie weitere Einzelheiten der Erfindung werden im Folgenden anhand eines in den Zeichnungen schematisch dargestellten Ausführungsbeispiels näher erläutert. Hierbei zeigen:
- Figur 1: einen Querschnitt durch einen teilweise gefüllten Radialadsorber,
- Figur 2: einen Längsschnitt durch den teilweise gefüllten Radialadsorber
- Figur 3: eine perspektivische Ansicht eines Trennwandmoduls und
- Figuren 4 und 5: einen Abstandshalter im Detail.

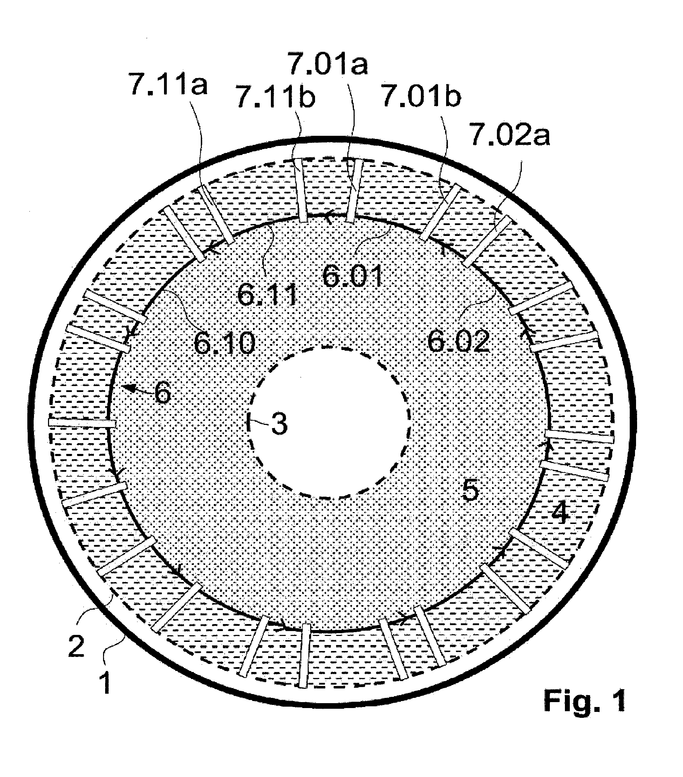

Die horizontale Bildebene der Figur 1 durchschneidet die zylinderförmige Außenwand 1 des Behälters eines Radialadsorber. Dieser enthält in dem Ausführungsbeispiel zwei Körbe, einen Außenkorb 2 und einen Innenkorb 3, die ebenfalls von der Bildebene durchschnitten werden. Dadurch wird der Blick frei für eine Draufsicht auf zwei schon teilweise eingefüllte Schüttungen, eine erste, äußere Schüttung 4 und eine zweite, innere Schüttung 5. Außerdem sieht man die obere Kante eines Trennrings 6, der in dem Beispiel aus elf Trennwandelementen 6.01 bis 6.11 besteht.

Wenn der Radialadsorber noch leer ist, wird in einem Schritt (a) der Trennring auf den Boden gestellt, indem die Trennwandelemente 6.01 bis 6.11 aufgestellt und seitlich miteinander verbunden werden. Der Trennring wird mittels Abstandshaltern 7.01 a bis 7.11 b relativ zum äußeren Korb 2 justiert. Die Abstandshalter greifen in die Langlöcher ein, die der äußere Korb aufweist. (Der innere Korb weist ebenfalls solche Langlöcher auf, um gasdurchlässig und in axialer Richtung elastisch zu sein, Details siehe EP 402783 A2 = US 5827485)

Anschließend wird über einen Schlauch ein erstes Adsorbens - in dem Beispiel Alugel - zwischen den äußeren Korb 2 und den Trennring 6 eingefüllt, bis etwa 80 % der Höhe der Trennwandelemente erreicht ist. Das eingeführte erste Adsorbens bildet einen ersten Teil einer ersten Schüttung 4.

Anschließend, vorher oder gleichzeitig wird ebenfalls über einen Schlauch ein zweites Adsorbens - in dem Beispiel ein Molekularsieb des Typs 13X - in den angrenzenden Raum zwischen Trennring 6 und innerem Korb 3 eingefüllt, in der Regel bis auf etwa die gleiche Höhe wie das erste Adsorbens. Dann sieht der teilweise befüllte Radialadsorber so aus, wie es in Figur 1 dargestellt ist.

In einem ersten Schritt (b) wird nun der Trennring nach oben verschoben, allerdings nicht als Ganzes. Um ein erstes Trennmodul 6.01 beweglich zu machen, werden zunächst die Abstandshalter 7.01 a und 7.01 b abgebaut. Anschließend wird das Trennmodul 6.01 nach oben aus den Schüttungen herausgezogen, und zwar so weit, dass sein unterer Rand noch sicher (ca. 10 cm) in der Schüttung steckt. Anschließend werden die Abstandshalter 7.01 a und 7.01 b wieder montiert, indem sie entsprechend weiter oben in den äußeren Korb 2 eingehängt werden. Dieser Schritt wird für jedes weitere Trennwandmodul 6.02 bis 6.11 durchgeführt. Je nach Größe des Adsorbers und Verfügbarkeit von Montagepersonal kann dieser Schritt auch gleichzeitig für zwei oder mehr Trennwandmodule durchgeführt werden. Anschließend wird eine weitere Schicht von erstem und zweitem Adsorbens eingefüllt, wie es oben beschrieben ist.

Der Schritt (b) wird nun so lange wiederholt, bis die gewünschte Füllhöhe erreicht ist. Anschließend können die Trennwandmodule komplett aus den Schüttungen herausgezogen und einzeln durch ein Mannloch aus dem Behälter entfernt werden. Vor dem Beginn der Füllung können die die Trennwandmodule umgekehrt über das Mannloch eingeführt werden; es ist nicht nötig, sie - wie einen massiven Trennring - bereits vor dem Zusammenschweißens des Behälters einzubringen.

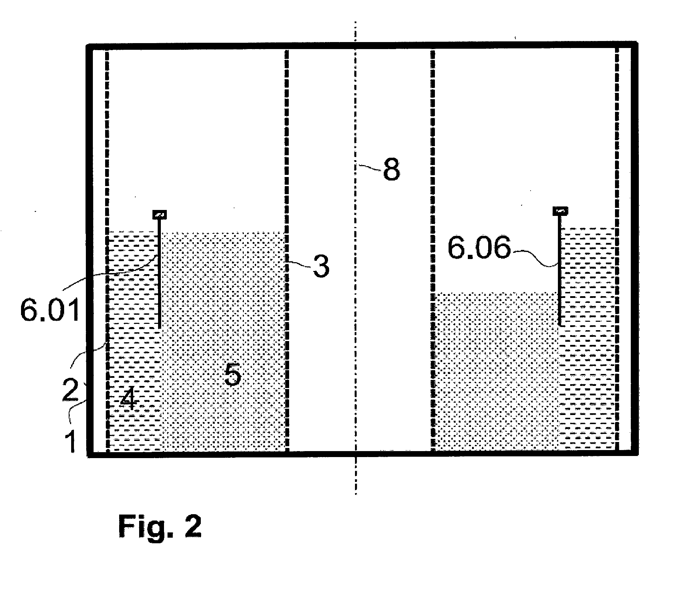

Figur 2 zeigt einen Ausschnitt der Höhe des Behälters im Längsschnitt entlang der Zylinderachse 8 im teilweise gefüllten Zustand. Auf der linken Seite, an dem Trennwandmodul 6.01 ist der Schritt (b) schon für beide Schüttungen 4, 5 abgeschlossen. Rechts ist dagegen nur die äußere Schüttung 4 aufgefüllt, die innere fehlt noch.

Daran erkennt man einen wichtigen Vorteil des erfindungsgemäßen Verfahrens. Die Füllung der beiden Schüttungen 4, 5 kann - innerhalb des aktuellen Schritts (b) - unabhängig voneinander vorgenommen werden.

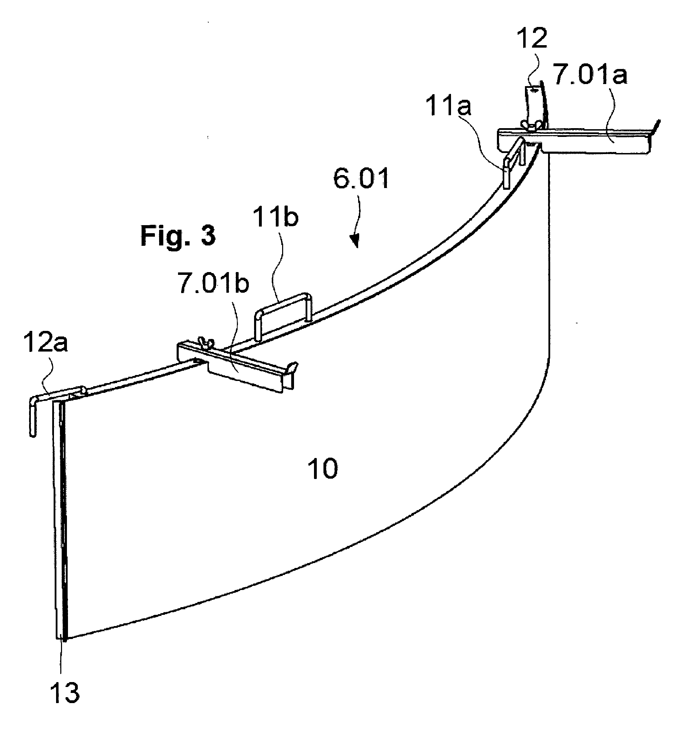

Ein einzelnes Trennwandmodul ist im Detail in Figur 3 dargestellt. Sein wesentlicher Bestandteil ist eine massive Metallwand 10, welche Form eines Kreisbogenabschnitts aufweist. Die obere Kante ist durch ein ebenfalls entsprechend gebogenes Winkelblech verstärkt. An der oberen Kante sind zwei Handgriffe 11 a, 11 b befestigt, die das Herausziehen aus den Schüttungen wesentlich erleichtern und beschleunigen. An beiden Enden befinden sich Bohrungen 12 in der Oberkante. In diese wird ein u-förmiges Verbindungselement 12a eingesteckt, das eine sichere Kopplung mit dem benachbarten Trennwandmodul 6.02 (siehe Figur 1) ermöglicht.

An einer der beiden vertikalen Kanten des Trennwandmoduls 6.01 befindet sich eine Winkelleiste 13, deren Biegekante mit der Kante der Metallwand verbunden ist, vorzugsweise durch eine Schweißverbindung. Der Innenwinkel der Winkelleiste ist zum benachbarten Trennwandmodul hin orientiert. Während des Herausziehens eines Trennwandmoduls kann die vertikale Kante des benachbarten Moduls in der Winkelleiste gleiten und geführt werden. Diese Führung bewirkt gleichzeitig eine Abdichtung gegenüber den Teilchen der Schüttung, sodass beim Herausziehen auch keine unerwünschte Vermischung der beiden Adsorbentien vorkommt.

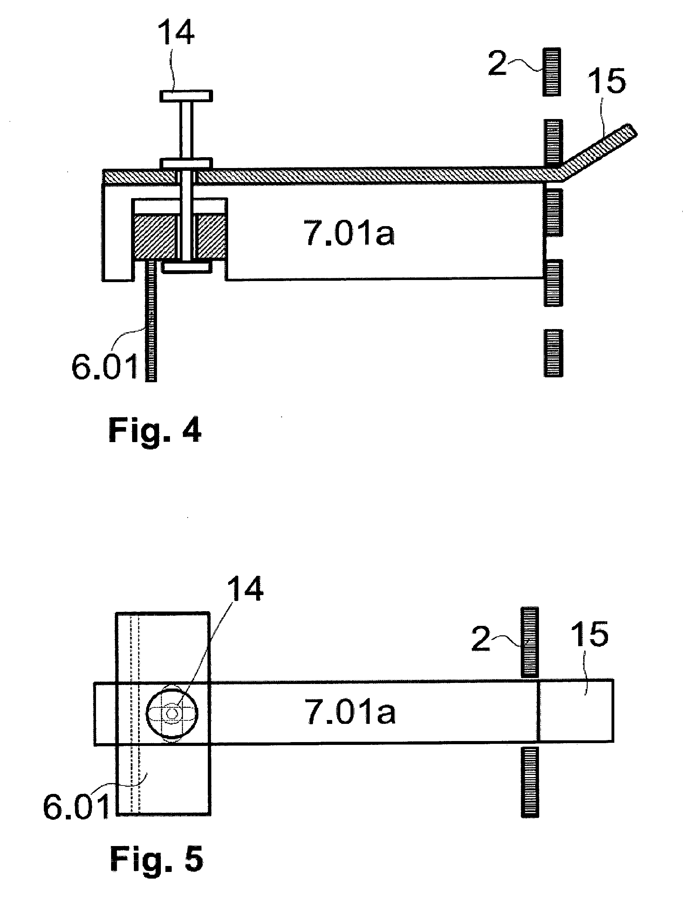

In Figur 3 sind außerdem die Abstandshalter 7.01 a und 7.01 b zu sehen, deren Aufbau und Funktion nun anhand der Detaildarstellung in den Figuren 4 und 5 näher erläutert werden.

Mittels einer leicht und ohne Werkzeug zu öffnenden Verbindung 14 wird der Abstandshalter mit der oberen Kante des Trennwandmoduls 6.01 verbunden. In dem Ausführungsbeispiel wird dazu eine konventionelle Schraubverbindung genutzt. Alternativ kann eine Schnellspanneinrichtung eingesetzt werden. Für die Verbindung mit dem äußeren Korb weist der Abstandshalter einen abgewinkelten Abschnitt 15 auf, der im montierten Zustand in eines der Langlöcher des Korbs eingreift.

## Patentansprüche

1. Verfahren zum Herstellen eines horizontal durchströmten Adsorbers mit zwei Adsorbentien, der zwei unmittelbar benachbarte Schüttungen (4, 5) in einem liegenden oder stehenden Behälter (1) enthält, wobei zwischen den beiden Schüttungen eine vertikale Grenzfläche besteht und wobei eine erste Schüttung (4) ein erstes Adsorbens enthält und eine zweite Schüttung (5) ein zweites Adsorbens enthält, das sich in seiner chemischen Zusammensetzung und/oder in seiner Teilchengröße von dem ersten Adsorbens unterscheidet, wobei bei dem Verfahren
(a) eine vertikale Trennwand (6) auf den Boden des Adsorptionsbetts gestellt wird und anschließend auf jeder Seite der Trennwand je eines der beiden Adsorbentien bis zu einer ersten Höhe eingefüllt wird, die den oberen Rand der Trennwand nicht überschreitet,
(b) die vertikale Trennwand (6) so weit nach oben verschoben wird, dass ihr unterer Rand noch in der vorhandenen Schüttung steckt, und auf jeder Seite der Trennwand (6) je eines der beiden Adsorbentien bis zu einer zweiten Höhe eingefüllt wird, die den oberen Rand der verschobenen Trennwand (6) nicht überschreitet, und
(c) der Schritt (b) so oft wiederholt wird, bis eine vorbestimmte Füllhöhe erreicht ist,
**dadurch gekennzeichnet, dass** die vertikale Trennwand aus mindestens drei Trennwandmodulen (6.01, ..., 6.11) aufgebaut ist, die sich nur über einen Teil der Länge oder des Umfangs der vertikalen Trennwand (6) erstrecken und unabhängig voneinander in vertikaler Richtung bewegbar sind.

2. Verfahren nach Anspruch 1, bei dem der horizontal durchströmte Adsorber durch einen Radialadsorber und die Trennwand durch einen kreisförmigen Trennring gebildet werden, wobei der Behälter des Radialadsorbers eine zylinderförmige Außenwand und zwei zylinderförmige Körbe (2, 3) aufweist, die das Adsorptionsbett begrenzen.

3. Verfahren nach Anspruch 2, **dadurch gekennzeichnet, dass** nach dem Verschieben des Trennrings am oberen Rand mindestens eines Trennwandmoduls mindestens ein, insbesondere zwei Abstandshalter (7.01a, ... , 7.11 b) angeordnet werden, welche das Trennwandmodul (6.01, ..., 6.11) temporär mit dem äußeren Korb (4) verbinden, wobei diese Abstandshalter bei Beginn des nächsten Schritts (b) abgenommen und nach dem Verschieben des Trennwandmoduls (6.01, ..., 6.11) wieder angebracht werden.

4. Verfahren nach Anspruch 3, **dadurch gekennzeichnet, dass** die Abstandshalter durch Einhaken am äußeren Korb mit dem äußeren Korb (2) verbunden werden.

5. Verfahren nach einem der Ansprüche 1 bis 4, **dadurch gekennzeichnet, dass** jedes Trennwandmodul (6.01, ..., 6.11) ein Mittel zum dichten Verbinden mit dem benachbarten Trennwandmodul (6.01, ..., 6.11) aufweist, wobei dieses Mittel insbesondere durch eine Winkelleiste (13) entlang einer der beiden vertikalen Kanten des Trennwandmoduls (6.01, ..., 6.11) gebildet wird.

6. Trennwandmodul (6.01, ..., 6.11) zum Einsatz in dem Verfahren nach einem der Ansprüche 1 bis 5, das eine ebene oder gebogenen vertikale Platte (10) und ein Mittel zum dichten Verbinden mit dem benachbarten Trennwandmodul aufweist, wobei dieses Mittel insbesondere durch eine Winkelleiste (13) entlang einer der beiden vertikalen Kanten des Trennwandmoduls (6.01, ..., 6.11) gebildet wird.

7. Trennwandmodul nach Anspruch 6, **dadurch gekennzeichnet, dass** es mit einem oder mehreren Abstandshaltern temporär verbindbar ist.

8. Trennwandmodul nach Anspruch 7, **dadurch gekennzeichnet, dass** die Abstandshalter durch Einhaken am äußeren Korb (2) mit dem äußeren Korb verbindbar sind.
